# EUROPEAN PATENT APPLICATION

(11) **EP 1 677 217 A2**
(43) Date of publication of application: **05.07.2006**
(21) Application number: 05112771.0
(22) Date of filing: 22.12.2005
(51) Int. Cl.: G06F 17/30

(54) **Method and infrastructure for processing a text search query in a collection of documents**

(30) Priority: 29.12.2004 EP 04107041
(71) Applicant: International Business Machines Corporation, Armonk, 35 10504 (US)
(72) Inventor: Dörre, Jochen Dr., 71032 Böblingen (DE); Matschke, Monika, 75365 Calw (DE); Seiffert, Roland, 71083 Herrenberg (DE)
(74) Representative: Klein, Hans-Jörg

(57) **Abstract**

A method and an infrastructure are provided for processing a text search query in a collection of documents (100). Therefore, the search conditions on search terms of a given a text search query are translated into conditions on index terms.

According to the present invention the documents of said collection (10) are grouped in blocks of N documents, respectively. Then, a block posting index (20) is generated and stored, said block posting index (20) comprising a set of said index terms and a posting list for each index term of said set, enumerating all blocks in which said index term occurs in at leas one document of the block. Besides, intrablock postings (30) are generated and stored for each block and each index term, said intrablock postings (30) comprising a bit vector of length N representing the sequence of documents forming said block, wherein each bit indicates the occurrence of said index term in the corresponding document.

The conditions of a given query are then processed by:
- using said block posting index (20) to obtain hit candidate blocks comprising at least one document being candidate for fulfilling said conditions,
- evaluating said conditions on the bit vectors of said hit candidate blocks to verify the corresponding documents and
- identifying the hit documents fulfilling said conditions.

## Description

### Background of the Invention

### 1. Field of the Invention

The present invention relates to a method and an infrastructure for processing text search queries in a collection of documents. Particularly, the present invention allows to take advantage of so called SIMD (single instruction multiple data) units - which have become current processor features - to further optimize Boolean query processing.

### 2. Description of the Related Art

Text search in the context of database queries becomes more and more important - most notably for XML processing. Current text search solutions tend to focus on "stand-alone systems".

The purpose of a text search query is usually to find those documents in a collection of documents that fulfil certain criteria, the so-called search conditions, such as that the document should contain certain words. In many cases, the "relevance" of documents fulfilling the given search conditions has to be calculated as well by using a process called scoring. Most often, users are only interested in seeing the "best" documents as result of a text search query. That is why most technology aims at producing the first N best results for relatively simple user queries as fast as possible. In the context of database queries, especially to support XML, queries are complex, i.e. expressing many conditions, and all results are needed for combination with conditions on other database fields. As the size of document collections to be searched is constantly increasing, efficiency of text search query processing becomes an ever more important issue.

Text search query processing for fulltext search is usually based on "inverted indexes". To generate inverted indexes for a collection of documents, all documents are analysed to identify the occurring words or search terms as index terms together with their positions in the documents. In an "inversion step" this information is basically sorted so that the index term becomes the first order criteria. The result is stored in a posting index comprising the set of index terms and a posting list for each index term of said set.

Most text search queries comprise Boolean conditions on index terms which can be processed by using an appropriate posting index.

### Object of the Invention

Starting from this, the object of the present invention is to provide a method and an infrastructure for processing a text search query in a collection of documents that perform extraordinarily well, especially for complex queries returning all results.

### Brief Summary of the Invention

The foregoing object is achieved by a method and an infrastructure as laid out in the independent claims. Further advantageous embodiments of the present invention are described in the subclaims and are taught in the following description.

According to the present invention a method and an infrastructure are provided for processing text search queries in a collection of documents, wherein a text search query comprises search conditions on search terms, said search conditions being translated into conditions on index terms. The documents of said collection are grouped in blocks of N documents, respectively, before a block posting index is generated and stored. Said block posting index comprises a set of index terms and a posting list for each index term of said set, enumerating all blocks in which said index term occurs at least once. Further, intrablock postings are generated and stored for each block and each index term. Said intrablock postings comprise a bit vector of length N representing the sequence of documents forming said block, wherein each bit indicates the occurrence of said index term in the corresponding document. The conditions of a given query are processed by, first, using said block posting index to obtain hit candidate blocks comprising documents being candidates for fulfilling said conditions, then, evaluating said conditions on the bit vectors of said hit candidate blocks to verify the corresponding documents and, finally, identifying the hit documents fulfilling said conditions.

The invention is based on the idea of grouping the documents of the collection in blocks to treat N documents together as a single block. Consequently, a block posting index is generated and stored for the so formed blocks of the collection. In the context of this block posting index a block comprising N documents takes the role of a single document in the context of a standard inverted index.

Usually, the block posting index according to the invention does not comprise any positional or occurrence information, thus allowing a very quick processing of search conditions that do not require this kind of information, like Boolean conditions.

In a first step, the conditions of a given query are evaluated by using the block posting index. Thus, it is possible to identify all blocks of the collection comprising a set of one or more documents fulfilling the conditions when taken together. I.e., the resultant "hit candidate" blocks may but do not necessarily comprise a hit document. So, processing the conditions of a given query on the block posting index has a certain filter effect as this proceeding reduces significantly the number of documents to be searched.

In a second step, the individual documents forming the "hit candidate" blocks have to be validated. Therefore, the index structure proposed by the invention comprises intrablock postings for each block of the collection and for each index term of the block posting index. Another main aspect of the invention is the data structure of these intrablock postings comprising a bit vector for each block and each index term. This data structure allows a very fast processing of the relevant information to validate the individual "hit candidate" documents.

There are different possibilities to perform the evaluation on said bit vectors. E.g. this may be done bit by bit. In another more advantageous embodiment of the present invention the bit vector structure of the here relevant information is used for parallel processing. Therefore, an SIMD (single instruction multiple data) unit can be used to take advantage of current hardware features.

It should be mentioned here, that the block posting index may comprise additional information depending on the implementation. E.g. the posting lists may not only enumerate all blocks in which a certain index term occurs but also the number of occurrences for each block.

In an enhanced embodiment of the present invention the intrablock scoring information is generated and stored in a separate data structure. Then, this intrablock scoring index can be used for scoring the hit documents identified for a given query. Thus, it is possible to use a block posting index without occurrence information even if scoring is necessary. If not, the occurrence information, which is the base for scoring, need not to be accessed and decoded because it is kept in a separate index data structure not interleaved in the posting lists of the block posting index.

A further enhanced embodiment of the present invention refers to the case that an intrablock scoring index is available and scoring is needed. For this case the invention proposes to provide a buffer to accumulate the intrablock scoring information of several hit documents. Thus, it is possible to use hardware features designed for parallel processing, like SIMD units, also to perform the score calculations.

A further object of the present invention is to provide an infrastructure to perform a method for processing a text search query in a collection of documents, as described above.

### Brief Description of the Several Views of the Drawings

The novel features of the present invention are set forth in the appended claims. These features, additional objectives and advantages of the present invention as well as preferred modes of use will be apparent and best understood by reference to the following detailed description of illustrative embodiments, when read in conjunction with the accompanying drawing, wherein:
Fig. 1 shows a flow chart for generating an index structure according to the present invention;
Fig. 2 shows an example for an index structure according to the present invention; and
Fig. 3 shows a flow chart for processing a text search query according to the present invention.

### Detailed Description of the Invention

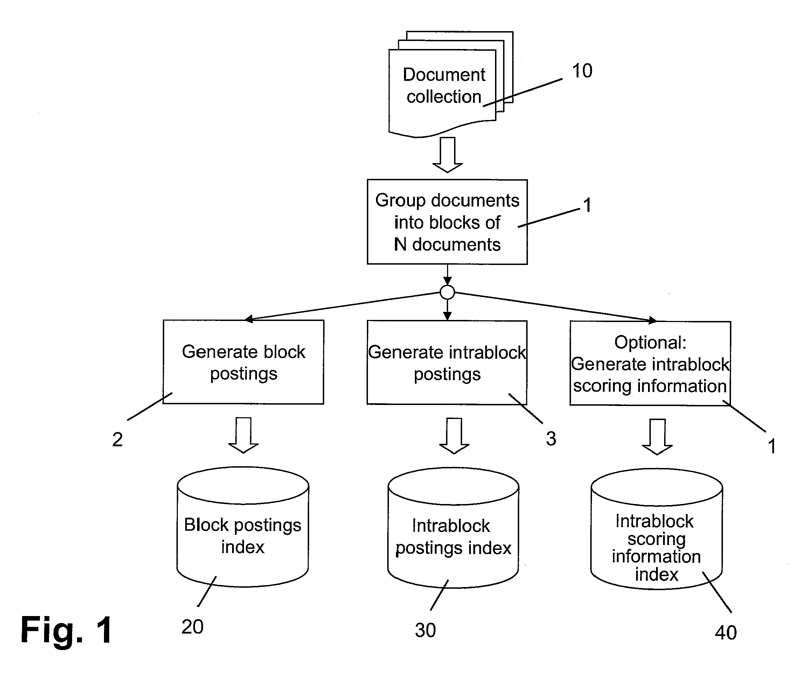

Besides showing a flow chart for generating an index structure according to the present invention, Fig. 1 also illustrates the infrastructure necessary for implementing the method proposed by the present invention.

In terms of the present invention, a text search query is carried out on a given document collection, which is designated by reference numeral 10 in Fig. 1. In a first step 1, all documents of this collection 10 are grouped into blocks of N documents using appropriate grouping means (not shown). By choosing the block size N advantage can be taken of hardware features available in the infrastructure, e.g. SIMD (single instruction multiple data) extensions like SSE2 in Intel/AMD processors or VMX in PowerPC processors. Preferably, N should be chosen as vector length of said unit or one of its multiples. In case of an SIMD unit, N=128 is an appropriate block size, i.e., each block represents 128 consecutive documents of the collection 10.

In a second step 2, block posting lists are generated for each index term of a set of index terms, wherein each block posting list enumerates all blocks in which the corresponding index term occurs. It should be mentioned here that the block posting lists according to the invention may also comprise additional information, like the number of occurrences of the corresponding index term for all blocks enumerated. These block posting lists are stored in a block posting index 20. Since the block posting index 20 of the present invention is an inverted index it may be generated as described above in connection with the state of the art wherein each block takes the role of a document. However, in an advantageous embodiment of the present invention the block posting index 20 is generated by using an already existing index structure, like a full posting index enumerating all occurrences of all index terms in all documents of the collection 10. In any case, there must be appropriate means (not shown) for generating and storing the block posting index 20.

Beside the block posting index 20 intrablock postings are generated for each block and each index term and are stored in an intrablock posting index 30. Each intrablock posting comprises a bit vector of length N representing the sequence of documents forming said block. Each bit of the bit vector indicates whether the index term related to the intrablock posting occurs in the document corresponding to said bit. The procedure of generating the intrablock postings, designated by reference numeral 3, implies that the infrastructure according to the invention comprises appropriate means for generating the before described bit vectors of length N.

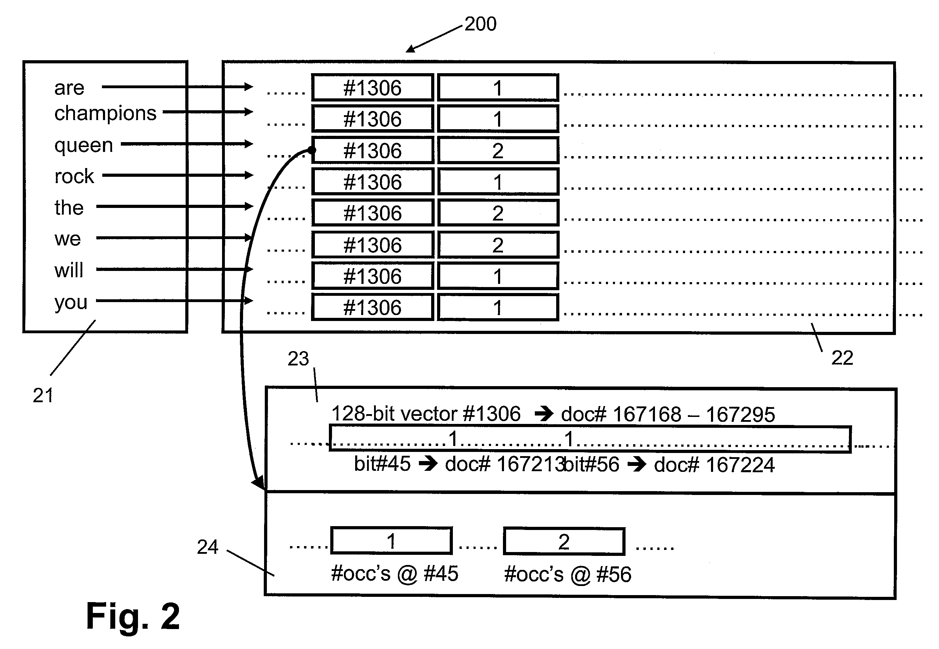

In the here described embodiment of the present invention intrablock scoring information is generated in step 4 in addition to the intrablock postings. Again, this implies that the infrastructure according to the invention comprises appropriate means for generating said scoring information. An example for intrablock scoring information will be described in connection with Fig. 2. This intrablock scoring information is stored in a separate data structure designated as intrablock scoring information index 40.

The example illustrated in Fig. 2 refers to a text search query based on a set of index terms "are, champions, queen, rock, the, we, will, you". The block posting index 200, only partly shown, uses this set of index terms 21 as order criteria so that reference numeral 22 designates the block posting lists related to the index terms, respectively. Exemplarily, only one entry of the block posting lists is specified in each block posting list 22, namely the one of block 1306. In addition to the information, that the related index term occurs in at least one of the documents of block 1306, the block posting lists 22 of the here described example comprise the number of occurrences of said index term in said block 1306.

Beside the block posting index 200 Fig. 2 shows, at least partly, the intrablock postings 23 and the intrablock scoring information 24 for block 1306 and the index term "queen". Block 1306 comprises the 128 consecutive documents 167168 to 167295 of the collection. Consequently, the intrablock postings 23 comprise an 128 bit vector. Each bit of this vector represents one of the documents 167168 to 167295. A "1" at position 45 and 56 indicates that the 45th and the 56th document, which are documents 167213 and 167224, contain the index term "queen". The intrablock scoring information 24 is stored in a separate data structure. In the here described embodiment the number of occurrences of index term "queen" in a document is used as intrablock scoring information, which is 1 for the 45th document, i.e. document 167213, and 2 for 56th document, i.e. document 167224 of the collection. It should be mentioned here that all kinds of scoring information may be stored in the intrablock scoring index and that the here described embodiment is just an example for one possibility of implementing the present invention.

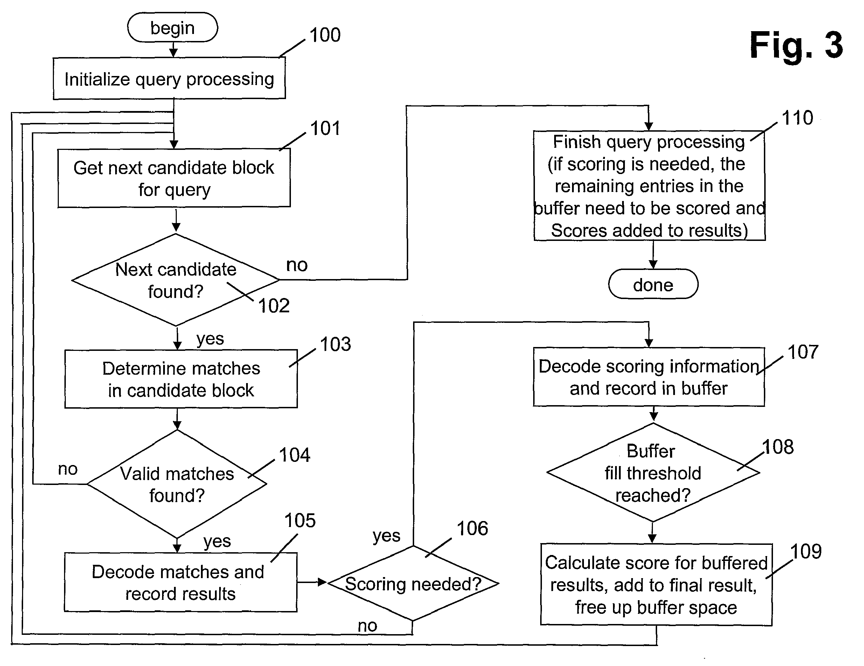

The flowchart of Fig. 3 illustrates a method for processing a text search query in a collection of documents, which uses an index structure as shown in Figures 1 and 2 and described above in detail. Especially Fig. 3 illustrates, how to validate the hit candidate blocks according to the invention, which is necessary to identify the hit documents of the collection. Therefore, the intrablock posting index is used, which will be described in connection with steps 100 to 105 of the flow chart.

Processing a text search query in a collection of documents always starts with translating the search conditions of said query into conditions on the index terms of the index structure used. It should be mentioned here, that in consequence the infrastructure for processing a text search query always comprises means for translating the search conditions on search terms of a given text search query into conditions on index terms.

In a first step 100 query processing is initialized which comprises among other procedures said translation of the search conditions into conditions on index terms.

Then with step 101 processing enters a threefold loop. Step 101 is referred to as getting the next hit candidate block. This means the query conditions are evaluated by using the block posting index. Consequently, the query is not evaluated for the single documents but for the blocks of the collection. This processing can be done using any of the well-known query processing methods on inverted index structures. The result of this evaluation is a hit candidate block comprising at least a set of documents fulfilling the conditions when taken together. I.e., a hit candidate block does not necessarily comprise a single hit document.

Step 102 verifies whether a next hit candidate block has been found. If not, query processing is finished, indicated with step 110. If a next hit candidate block has been found the matches are determined in said hit candidate block. Therefore, the conditions of the query are evaluated on the corresponding bit vectors of the intrablock posting index in step 103.

Step 104 checks whether valid matches, i.e. hit documents, are found. If the intrablock postings have the form of 128-bit vectors, a complete 128-bit vector can be processed in one step by using an SIMD unit. If no SIMD unit is available, a 128-bit vector can be processed by four 32-bit units on a 32-bit architecture or by two 64-bit units on a 64-bit architecture. However, even without an SIMD unit, this evaluation scheme may be beneficial due to good cache locality. If the result vector is zero no hit document has been found in said block and processing returns to step 101. If the result vector is non-zero at least one hit has been validated successfully. Then in step 105, the non-zero bit positions are decoded to determine the hit documents and the results are stored. Hereby, validation of a hit candidate block and identification of the hit documents within said block are concluded.

In the here described embodiment of the present invention query processing further comprises the possibility of scoring the identified hit documents. Therefore, step 106 asks whether scoring is needed. If not, processing returns to step 101.

In case that scoring is needed, the intrablock scoring index is accessed to decode the intrablock scoring information of the hit document. This scoring information is recorded in a buffer which is indicated in step 107. Said buffer is used to accumulate the scoring information for several hit documents. Therefore, it could advantageously be managed as a round-robin queue. Step 108 checks whether a buffer fill threshold is reached. If so, the score for all buffered results is calculated in step 109. Thus, the score calculation can be vectorized using appropriate hardware features available in the infrastructure, because the score calculation requires that the same mathematical formula is evaluated on the scoring information for each hit document. If, e.g., calculation is done using 32-bit float values then a 128-bit SIMD unit can evaluate the same formula on four complete sets of scoring information in parallel. If no SIMD unit or alternative vector processor is available, this processing must be done element-wise. However, even without an SIMD unit, this evaluation scheme may be beneficial due to good cache locality. The results of said score calculation are added to the final results as a block instead of individual inserts. Finally, the buffer space is freed up and processing returns to step 101.

The content of Fig. 3 can also be expressed by the following program code:

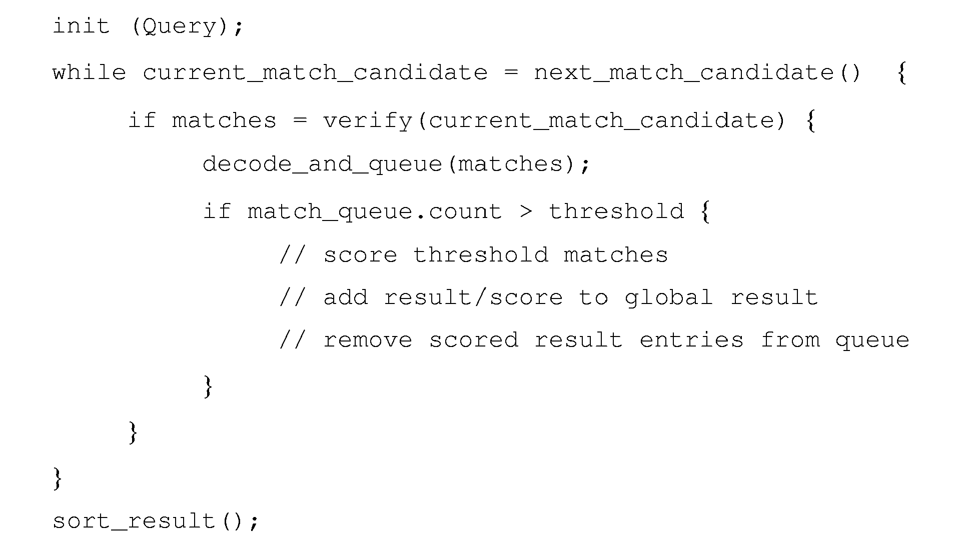

Finally, it should be pointed out once again, that the method described above performs extraordinarily well, especially for complex Boolean queries returning all results. Complex queries with high-frequent terms and non-ranked queries benefit most. The block-based Boolean filtering proposed by the invention is very efficient for many typical queries in database context. Besides, only modest changes to the existing code are necessary to implement the invention. The new index data structure can be generated from current indexes. The query processing proposed by the invention conceptually just adds another layer for Boolean matching.

## Claims

1. A method for processing a text search query in a collection of documents (10),
wherein a text search query comprises search conditions on search terms, said search conditions being translated into conditions on index terms;
the method being **characterized**
**in that** the documents of said collection (10) are grouped in blocks of N documents, respectively;
**in that** a block posting index (20) is generated and stored, said block posting index (20) comprising a set of said index terms and a posting list for each index term of said set, enumerating all blocks in which said index term occurs;
**in that** intrablock postings (30) are generated and stored for each block and each index term, said intrablock postings (30) comprising a bit vector of length N representing the sequence of documents forming said block, wherein each bit indicates the occurrence of said index term in the corresponding document; and
**in that** the conditions of a given query are processed by:
- using said block posting index (20) to obtain hit candidate blocks comprising documents being candidates for fulfilling said conditions,
- evaluating said conditions on the bit vectors of said hit candidate blocks to verify the corresponding documents and
- identifying the hit documents fulfilling said conditions.

2. A method according to claim 1, wherein the evaluation on said bit vectors is done by parallel processing.

3. A method according to claim 1, wherein an SIMD (single instruction multiple data) unit is used for the evaluation on said bit vectors.

4. A method according to claim 1, wherein said block posting index (20) comprises additional information, like the number of occurrences for each index term and each block.

5. A method according to claim 1, wherein intrablock scoring information is generated and stored in a separate data structure (40).

6. A method according to claim 5, wherein the hit documents identified for a given query are scored by using said intrablock scoring information.

7. A method according to claim 6, wherein the scoring information of several hit documents is accumulated in one buffer to perform the score calculation.

8. A method according to claim 7, wherein an SIMD (single instruction multiple data) unit is used for parallel score calculation.

9. An infrastructure for processing a text search query in a collection of documents, said infrastructure comprising:
means for translating the search conditions on search terms of a given text search query into conditions on index terms;
means for grouping the documents of said collection in blocks of N documents, respectively;
means for generating and storing a block posting index comprising a set of index terms and a posting list for each index term of said set, enumerating all blocks in which said index term occurs;
means for generating and storing intrablock postings for each block and each index term, said intrablock postings comprising a bit vector of length N representing the sequence of documents forming said block, wherein each bit indicates the occurrence of said index term in the corresponding document;
an executor using said block posting index to process the conditions of a given query;
vector processor means for evaluating said conditions on the bit vectors of the resultant blocks; and
means for identifying hit documents.

10. An infrastructure according to claim 9, wherein the vector processor means is an SIMD unit.

11. An infrastructure according to claim 9, further comprising:
means for generating and storing intrablock scoring information in a separate data structure.

12. An infrastructure according to claim 11, further comprising:
scoring means using said intrablock scoring information for scoring the hit documents.

13. An infrastructure according to claim 12, wherein said scoring means comprise a buffer for accumulating the intrablock scoring information of several hit documents and a vector processor to perform the score calculation.

14. An infrastructure according to claim 13, wherein the vector processor means is an SIMD unit.

15. A computer program product stored on a computer usable medium, comprising computer readable program means for causing a computer to perform a method according to anyone of the preceding claims 1 to 8.
